## Europäisches Patentamt
## European Patent Office
## Office européen des brevets

(19)

(11) Numéro de publication: **0 211 739**
**B1**

(12)
# FASCICULE DE BREVET EUROPÉEN

(45) Date de publication du fascicule du brevet:
**31.05.89**

(51) Int. Cl.⁴: **D 21 B 1/32,** D 21 B 1/34

(21) Numéro de dépôt: **86401613.4**

(22) Date de dépôt: **18.07.86**

(54) Procédé et appareillage de préparation et triage primaire de pâte à papier.

(30) Priorité: **26.07.85 FR 8511453**

(43) Date de publication de la demande:
**25.02.87 Bulletin 87/9**

(45) Mention de la délivrance du brevet:
**31.05.89 Bulletin 89/22**

(84) Etats contractants désignés:
**AT DE FR GB IT SE**

(56) Documents cité:
**DE-C-398 039**
**GB-A-19 427**
**GB-A-166 094**
**US-A-2 727 439**

(73) Titulaire: **E. + M. Lamort Société Anonyme dite:,
rue de la Fontaine Ludot, F-51300 Vitry- le-
François (FR)**

(72) Inventeur: **Lamort, Pierre, Vitry en Perthois,
F-51300 Vitry Le François (FR)**

(74) Mandataire: **Loyer, Bertrand, Cabinet Pierre Loyer
77, rue Boissière, F-75116 Paris (FR)**

## Description

Dans le EP-A-0 120 766 ayant pour titre "procédé et dispositif de triage d'un mélange de pâte à papier et d'impuretés", on a décrit un procédé d'un appareil de lavage en discontinu susceptible d'opérer immédiatement en aval d'un pulpeur primaire du type Hélico n'opérant lui-même aucune séparation.

L'expérience montre cependant que ces moyens ne sont pas sans inconvénients pour les raisons suivantes:

Le dispositif selon le EP-A-0 120 766 traite le contenu d'un pulpeur primaire en quelques minutes, et doit pouvoir absorber le contenu entier du pulpeur en un ou deux passages. Lorsque la proportion et le volume des contaminants sont très élevés ce qui est le cas pour les papiers revêtus de polyéthylènes, de plus en plus fréquents, on est ainsi conduit a limiter à environ 20 % les proportions des vieux papiers plastifiés dans le pulpeur, sans quoi le triage devient impossible, l'appareil ne pouvant recevoir une telle quantité de contaminants. D'autre part, cela conduit à utiliser des dispositifs de triage de grand volume, donc coûtex, et qui cependant ne fonctionnent que par brèves périodes.

D'autre part, étant donné que le pulpeur et son dispositif de triage fonctionnent en discontinu, il est nécessaire de prévoir en aval un cuvier de fortes dimensions, dans lequel la pâte est étendue et qui sert de volume tampon à partir duquel la suite du processus d'élaboration de la pâte à papier peut se poursuivre en continu. Pour un pulpeur d'environ 10 m³ à une concentration de 15 - 20 % il faut un cuvier de l'ordre de 50 à 100 m³ dans lequel la pâte est étendue à 5 % et qui sert de volume initial pour le processus en continu. Un tel cuvier comporte généralement un agitateur rapide en forme d'hélice qui brasse constamment le mélange.

Il existe des dispositifs qui comportent un volume de désintégration réparti en deux chambres mais ces dispositifs et processus de fonctionnement sont très éloignés de ceux de l'invention. Ce sont les dispositifs décrits aux brevets GB-A-19 427 et GB-A-166 094.

Il s'agit dans les deux cas d'un pulpeur réparti en deux chambres contiguës: une entrée d'immersion pourvue d'un arbre muni de grands bras qui tournent et entraîne la masse de papier dans l'eau. Cette entrée est suivie d'une chambre longitudinale ou s'opère la désintégraton proprement dite. Le passage de l'entrée à la chambre de désintégration est nécessairement continu car il ne s'agit que d'un seul appareil et aucune vanne n'est prévue entre les deux chambres.

Ces appareils n'apportent donc aucune solution au problème posé, savoir la nécessité de prévoir en aval du dispositif de triage un cuvier de fortes dimensions pour obtenir un volume tampon permettant ensuite un processus d'élaboration de la pâte en continu.

L'invention a donc pour objet un procédé de préparation et de triage primaire de pâte à papier, a partir de papiers de récupération et autres substances fibreuses dans lequel la désintégration est réalisée dans un pulpeur primaire de type connu, et dans lequel le tri est réalisé dans un trieur également de type connu, caractérisé par le fait que le contenu du pulpeur primaire, lorsque la désintégration est achevée, est directement déversé en discontinu dans un cuvier de grande dimension, où il est brassé par un agitateur d'arbre longitudinal muni de bras en spiral, pour être déversé de là en discontinu dans le trieur.

On peut ainsi faire fonctionner le trieur sur un rythme de discontinuité complètement différent de celui du pulpeur et pratiquement sans interruption et le contenu du pulpeur pourra être trié, par exemple en dix opérations successives et non plus en une seule, au maximum deux.

Ce processus présente de grands avantages:

- Le pulpeur peut travailler pratiquement sans interruptions autres que celles nécessaires à sa vidange et à son remplissage.
- Le trieur peut travailler également sans interruption et son volume peut être réduit.
- On peut régler la concentration dans le cuvier pour faciliter le travail du pulpeur.
- On peut utiliser sans difficulté jusqu'à 100 % de papiers plastifiés du type papiers recouverts de polyéthylène, ce qui est un énorme avantage.
- On peut réaliser l'alimentation continue du circuit aval soit par interposition d'un cuvier de taille réduite, soit par utilisation de trieurs jumelés tels que décrits dans le EP-A-120 766.

Il est à noter toutefois que ce processus n'est rendu possible que grâce à l'utilisation d'un cuvier à brassage par bras spirales. En effet, si l'on emploie les agitateurs couramment utilisés dans les cuviers, les contaminants du type feuilles plastiques s'amoncellent rapidement sur l'agitateur et provoquent des bourrages. Avec le brassage par bras en spirales d'angle faible, les plastique glissent le long des pales sans s'accrocher ni être déchiquetés de sorte que l'ensemble du bain est continuellement brassé et que le trieur peut fonctionner sans problème.

Ce processus permet en outre de réaliser des économies d'énergie du fait de la diminution de puissance nécessaire au trieur qui opère plus fréquemment mais sur de plus petites quantités.

L'invention vise la combinaison en séquence d'un pulpeur primaire, et d'un cuvier à brassage par un axe longitudinal portant des bras en spirale de Bernoulli d'angle faible, cuvier sur lequel est branché au moins un trieur du type decrit dans le EP-A-0 120 766, le cuvier pouvant comporter une arrivée d'eau de dilution. Elle vise également le cuvier de brassage, caractérisé en ce qu'il comporte un arbre longitudinal portant des bras en forme de spirale de Bernoulli d'angle faible, de l'ordre de 20 à 30°, disposés approximativement dans des plans peprendiculaires à l'axe du cuvier.

Un exemple de réalisation de l'invention est illustré sur le dessin annexé, sur lequel:

La figure 1 est un schéma de principe;
La figure 2 illustre la forme des bras de l'arbre de brassage du cuvier de la figure 1.

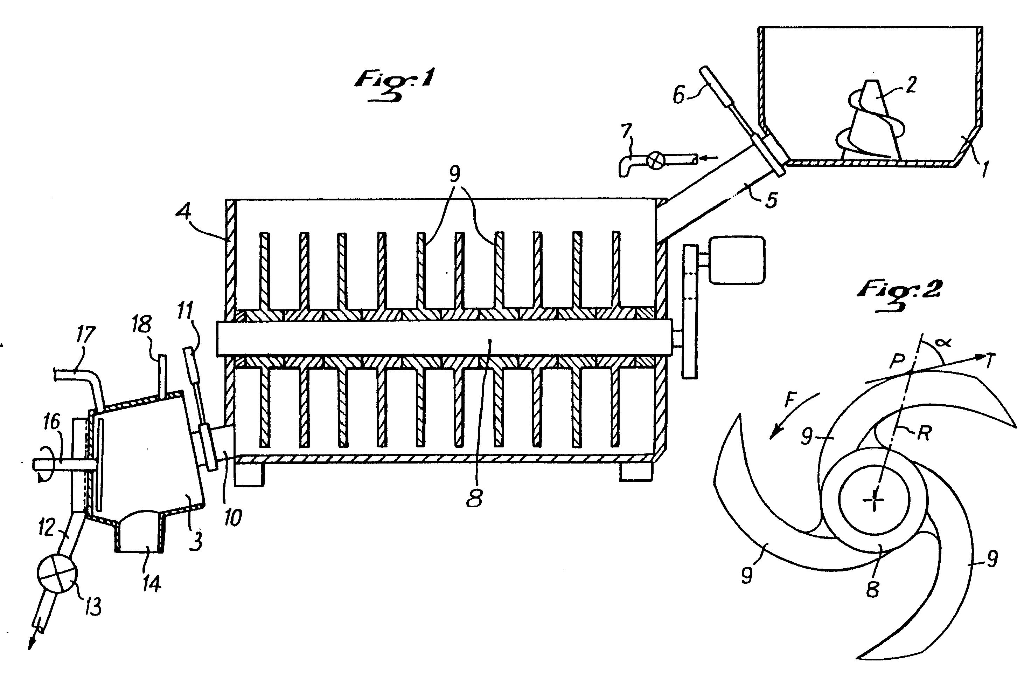

En se reportant à la figure 1, on voit que la combinaison selon l'invention est constituée, disposés en séquence:

- d'un pulpeur primaire 1, de type connu, tel qu'un pulpeur de type Hélico, comportant un agitateur désintégrateur centrifuge en hélice 2. De tels agitateurs n'effectuent aucune séparation: ils projettent violemment le mélange de papiers et de contaminants sur les parois de l'appareil, où la fibre se détache et se désintègre sans que les feuilles plastques et autres contaminants de grande surface soient désintégrés; ils opèrent en cuve ouverte, à des concentrations élevées de l'ordre de 15 à 20 % de matières sèches. On peut également utiliser des pulpeurs connus comprenant une grille de fond effectuant une première séparation de pulpe; mais dans le cadre de l'invention, cette utilisation ne présente pas d'avantages particuliers car cette séparation est suffisamment relative dans le trieur 3;

- d'un cuvier 4, de grandes dimensions (plusieurs fois le volume du pulpeur 1), avec lequel le pulpeur 1 communique par le conduit 5 contrôlé par la vanne 6 et pouvant comporter une arrivée d'eau 7. L'organe de brassage du cuvier 5 est un arbre longitudinal 8 portant des bras 9 dont la forme, en spirale de Bernoulli d'angle faible, est représentée figure 2.

Par l'expression forme en spirale de Bernoulli d'angle faible, il faut entendre des bras qui se developpent à partir de l'arbre avec un angle a approximativement constant entre chaque rayon R et la tengente T au bras au point P par où passe ce rayon. Les bras ont une section de préférence arrondie pour éviter de déchiqueter la matière. Ils tournent - à vitesse relativement faible, par exemple 2 à 10 tours minute, dans le sens de la flèche F; de telle sorte que les contaminants tendent à glisser le long des bras 9;

- d'au moins un trieur 3 selon le brevet 8 304 929 relié au cuvier 4 par le conduit 10 contrôlé par la vanne 11. Les autres organes du trieur 3 sont décrits dans le EP-A-0 120 766. En 12 se trouve la sortie de pâte, dirigée sur la pompe 13, et de là, sur le circuit général. En 14 se trouve la sortie de déchets. L'agitateur spacial 15 est entraîné par l'arbre 16. 17 est l'arrivée d'eau et 18 l'évent.

Le fonctonnement est le suivant:

Une fois effectuée la désintégration dans le pulpeur 1, la vanne 6 est ouverte et la totalité du contenu du pulpeur est déversée dans le cuvier 4. Le pulpeur 1 peut donc être rempli aussitôt et fonctionne de nouveau, la vanne 6 étant refermée. Le cycle du pulpeur dure environ 1/2 heure à 1 heure.

Pendant ce temps, le bain est continuellement brassé dans le cuvier 4 et prélevé régulièrement de façon discontinue par le conduit 10. La vanne 11 est ouverte et le trieur 3 est rempli, puis il est mis en marche en 16 après fermeture de la vanne 11. L'opération du trieur 3 dure 3 à 5 mn environ (temps non limitatif). La pâte est reprise par la pompe 13, les déchets sont lavés, et une nouvelle opération peut débuter par un nouveau remplissage du trieur 3. Il est donc possible d'effectuer environ 10 cycles de triage en 3 pour 1 cycle de désintégration en 1.

A titre d'exemple non limitatif, le pulpeur 1 pourra avoir un volume de 15 m$^3$, le cuvier 4 un volume de 75 cm$^3$ et le trieur 3 un volume d'environ 2 à 3 m$^3$, la concentration au pulpeur 1 pourra être de 15 à 20 % de matières sèches pour 5 à 7 dans le cuvier 4 et le trieur 3.

Le procédé et la combinaison de l'invention sont très souples et pourront être adaptés à chaque cas particulier, pour autant que le volume du cuvier soit au moins 3 fois plus grand que le volume utile du pulpeur et que le volume de chaque traitement du trieur 3 est de préférence 3 à 5 soit plus petit au moins que celui du pulpeur 1.

**Revendications**

1. Procédé de préparation et de triage primaire de pâte à papier à partir de papiers de récupération et autres substances fibreuses dans lequel la désintégration est réalisée dans un pulpeur primaire de type connu, et dans lequel le tri est réalisé dans un trieur également de type connu, caractérisé par le fait que le contenu du pulpeur primaire (1), lorsque la désintégration est achevée, est directement déversé en discontinu dans un cuvier (4) de grande dimension, où il est brassé par un agitateur d'arbre longitudinal (8) muni de bras en spiral, pour être déversé de là en discontinu dans le trieur (3).

2. Procédé selon la revendication 1, caractérisé en ce que l'on fait fonctionner le trieur (3) sur un rythme de discontinuité différent de celui du pulpeur.

3. Procédé selon la revendication 2 dans lequel on effectue environ dix cycles de triage en 3 pour 1 cycle de désintégration en 1.

4. Ensemble de traitement primaire de papiers de récupération ou analogues en vue de la fabrication de pâte à papier selon l'une quelconque des revendications 1 et 2, comprenant, en combinaison et en séquence, un pulpeur primaire de type connu, puis un cuvier de grandes dimensions pourvu d'un arbre longitudinal (8) de brassage à bras (9) en forme de spirale d'angle faible, et éventuellement d'une arrivée d'eau (7), ledit cuvier relié au pulpeur par un conduit (5) contrôlé par une vanne (6), enfin un trieur (3) du type connu relié au cuvier (4) par un conduit (10) contrôlé par une vanne (11).

5. Ensemble selon la revendication 3, caractérisé en ce que le cuvier (4) a un volume au moins égal à 3 fois celui du pulpeur (1) et le trieur (3) a un volume au moins 3 à 5 fois plus faible que celui dudit pulpeur (1).

6. Ensemble selon la revendication 3, caractérisé en ce que le cuvier (4) de brassage de pâte à papier et de contaminants comporte un arbre longitudinal de brassage (8) portant des bras en forme de spirale logarithmique d'angle faible, de l'ordre de 20 à 30° environ.

**Claims**

1. A method for the preparation and primary sorting of paper pulp from recovery papers and other fibrous materials, in which the disintegration is carried out by a primary pulper of known type, and in which the sorting is carried out by a sorter also of known type, characterized by the fact that the content of the primary pulper (1), when the disintegration is completed, is directly poured in batch quantities in a chest (4) of large size, where it is stirred by a stirrer having a longitudinal shaft (8) provided with spiral-shaped arms, in order to be poured therefrom in batches in the sorter (3).

2. A method according to claim 1, characterized in that the sorter (3) is operated on a discontinuity rythm which is different from that of the pulper.

3. A method according to claim 2, in which there are carried out about ten sorting cycles in 3 for 1 disintegration cycle in 1.

4. A primary treatment unit for recovery paper or similar, for the preparation of paper pulp according to any one of claims 1 and 2, including, in combination and in sequence, a primary pulper of known type, then a chest of large size fitted out with a stirring longitudinal shaft (8) provided with arms (9) in the shape of a spiral of small angle, and possibly a water input (7), said chest being connected to the pulper via a duct (5) controlled by a valve (6), and finally a sorter (3) of known type connected to the chest (4) via a duct (10) controlled by a valve (11).

5. A unit according to claim 3, characterized in that the chest (4) has a volume at least equal to 3 times that of the pulper (1), and the sorter (3) has a volume at least 3 to 5 times smaller than that of said pulper (1).

6. A unit according to claim 3, characterized in that the paper pulp and contaminants stirring chest (4) includes a stirring longitudinal shaft (8) carrying arms in the shape of a logarithmic spiral of small angle, of the order of 20 to 30° about.

**Patentansprüche**

1. Verfahren zur Aufbereitung und Primärsichtung von aus Altpapier und sonstigen Faserstoffen gewonnenem Papierbrei, wobei die Stofflösung in einem Primärpulper bekannter Bauart und die Sichtung in einem Sichter ebenfalls bekannter Bauart erfolgt, dadurch gekennzeichnet, daß der Inhalt des Primärpulpers (1) nach beendeter Stofflösung chargenweise direkt in eine große Stoffbütte (4) geleert, dort mit Hilfe eines Rührwerks mit Längswelle (8) und spiralförmigem Arm gerührt wird und von dort chargenweise in den Sichter (3) gelangt.

2. Verfahren nach Anspruch 1, dadurch gekennzeichnet, daß der Sichter (3) in einem anderen Chargentakt arbeitet als der Pulper.

3. Verfahren nach Anspruch 2, bei dem pro Stofflösungszyklus in 1 ca. zehn Sichtzyklen in 3 ablaufen.

4. Primäraufbereitungsanlage von Altpapier bzw. ähnlichen Stoffen zur Herstellung von Papierbrei nach Anspruch 1 und 2 mit folgegeschalteter Kombination von einem Primärpulper bekannter Bauart, einer großen Stoffbütte mit einer Längswelle (8) mit einem Spiralrührarm geringer Winkelsteigung und eventuell einem Wasserzulauf (7), wobei die Stoffbütte über eine ventilgesteuerte (6) Leitung (5) mit dem Pulper verbunden ist, sowie einem über eine ventilgesteuerte (11) Leitung (10) mit der Stoffbütte verbundenen Sichter (3) bekannter Bauart.

5. Anlage nach Anspruch 3, dadurch gekennzeichnet, daß die Stoffbütte (4) mindestens dreimal so viel Fassungsvermögen wie der Pulper (1) und der Sichter (3) ein mindestens dreibis fünfmal kleineres Fassungsvermögen als der Pulper (1) hat.

6. Anlage nach Anspruch 3, dadurch gekennzeichnet, daß die Papier- und Schmutzstoffrührbütte (4) eine Langswelle (8) mit einem Rührarm in Form einer logarithmitschen Spirale mit einem kleinen Winkel von ca. 20° - 30° besitzt.

Fig.1

Fig.2